# EUROPÄISCHE PATENTANMELDUNG

(11) **EP 0 537 647 A2**
(43) Veröffentlichungstag der Anmeldung: **21.04.1993**
(21) Anmeldenummer: 92117343.1
(22) Anmeldetag: 10.10.1992
(51) Int. Cl.: B29C 47/92, B29C 47/90, B29C 47/88

(54) **Extrudieranlage mit Wanddickenmessvorrichtung für ein extrudiertes Rohr**

(30) Priorität: 17.10.1991 DE 4134285
(71) Anmelder: CONPRO GmbH, D-32602 Vlotho (DE)
(72) Erfinder: Wölfl, Volkmar Rudolf, W-4973 Vlotho-Valdorf (DE); Neumann, Ulrich, W-4970 Bad Oeynhausen (DE)
(74) Vertreter: Müller, Karl-Ernst, Dr.

(57) **Zusammenfassung**

Eine Extrudieranlage für Kunststoffrohre, bestehend aus einem Extruder, einer Kühlkammer mit einer darin angeordneten wassergekühlten und das extrudierte Rohr gegen die Innenseite ihrer Wandung ziehenden Kalibrierhülse sowie einer nachgeschalteten, als Vakuumtank ausgebildeten Durchlaufkühlkammer, wobei eine Wanddickenmeßvorrichtung mit einem oder mehreren radial zum Rohr ausgerichteten und nach dem Ultraschallprinzip arbeitenden Meßköpfen vorgesehen ist, soll hinsichtlich der Meßgenauigkeit der Wanddickenmeßvorrichtung verbessert werden. Hierzu ist vorgesehen, daß Kalibrierhülse (3) und Wanddickenmeßvorrichtung (6) in einer ein Wasser-Vollbad beinhaltenden Kammer (1) angeordnet sind, wobei die Kammer (1) unter Abdichtung des Durchtritts für das extrudierte Rohr (16) unmittelbar mit dem Vakuumtank (7) verbunden und zwischen Meßteil (5) und Vakuumtank (7) eine wasser- und vakuumführende Verbindung (13, 9) eingerichtet ist.

## Beschreibung

Die Erfindung betrifft eine Extrudieranlage für Kunststoffrohre, bestehend aus einem Extruder, einer Kühlkammer mit einer darin angeordneten wassergekühlten und das extrudierte Rohr gegen die Innenseite ihrer Wandung ziehenden Kalibrierhülse sowie einer nachgeschalteten, als Vakuumtank ausgebildeten Durchlaufkühlkammer, wobei eine Wanddickenmeßvorrichtung mit einem oder mehreren radial zum Rohr ausgerichteten und nach dem Ultraschallprinzip arbeitenden Meßköpfen vorgesehen ist.

Eine gattungsgemäße Extrudieranlage ist aus der DE 39 36 496 A1 bekannt, bei welcher zu ihrer Kühlung die Kalibrierhülse mit gesonderten Kühlmittelkanälen versehen ist, durch die ein Kühlmittel, vorzugsweise Wasser, geleitet wird. Am Ende der Kalibrierhülse ist eine Wanddickenmeßvorrichtung mit zugeordneten Meßköpfen angeordnet, bei der zur Bewirkung des Schallübertragungskontaktes zwischen den Meßköpfen und dem zu messenden Rohr in der Vorrichtung eine das Rohr umschließende ringförmige Ausnehmung ausgebildet ist, in die Wasser eingeleitet wird, wobei die Meßköpfe radial an der wasserführenden Ausnehmung angeordnet sind.

Mit der bekannten Extrudieranlage ist der Nachteil verbunden, daß die Kalibrierhülse in ihrer Ausgestaltung wegen der darin angeordneten gesonderten Kühlmittelkanäle aufwendig ist; zudem muß die Kalibrierhülse an gesonderte Zuleitungen für das Kühlmittel angeschlossen werden. Als weiterer, technisch schwerwiegenderer Nachteil ist zu nennen, daß die Ankopplung der Meßköpfe an das zu messende Rohr nur unzureichend ist. Da das Rohr während der Messung die Wanddickenmeßvorrichtung durchläuft und dabei an der Innenseite der wasserführenden Ringausnehmung vorbeigeht, ist die Abdichtung der Ringausnehmung auch wegen des noch verformbaren, weil weichen und in seinem Außendurchmesser deswegen noch veränderbaren Rohres, beispielsweise durch Veränderung der Höhe des Vakuums, sowie unter Berücksichtigung des in der Kammer herrschenden Vakuums kaum beherrschbar, so daß Wasserverluste im Bereich der Ausnehmung nicht zu vermeiden sind; diese Wasserverluste beeinflussen die Genauigkeit der Meßwerte ganz erheblich. Ein zusätzlicher Nachteil besteht darin, daß die Höhe der zwischen Rohr und Meßkopf anstehenden Wassersäule von der Wanddicke des zu messenden Rohres abhängig ist, so daß bei wechselnden Wanddicken die Wassersäule einer Anpassung bedarf, was jedoch bei baulich festgelegten Abmessungen der Ringausnehmung in einer Wanddickenmeßvorrichtung kaum möglich ist.

Der Erfindung liegt daher die Aufgabe zugrunde, eine gattungsgemäße Extrudieranlage derart zu verbessern, daß die Meßgenauigkeit der Wanddickenmeßvorrichtung verbessert ist; dabei soll die Extrudieranlage in ihrem Aufbau vereinfacht und in ihrer Betriebssicherheit verbessert werden.

Die Lösung dieser Aufgabe ergibt sich aus den Patentansprüchen, welche dieser Beschreibung nachgestellt sind.

Die Erfindung sieht in ihrem Grundgedanken vor, daß die Kalibrierhülse und die Wanddickenmeßvorrichtung in einer gemeinsamen mit Wasser gefüllten Kammer mit einem Kühlteil und mit einem Meßteil angeordnet sind, wobei die Kalibrierhülse in dem ein Vollbad dafür beinhaltenden Kühlteil der Kammer liegt und die Wanddickenmeßvorrichtung in dem wassergefüllten Meßteil derart angeordnet ist, daß eine Ankopplung des wenigstens einen Meßkopfes an das extrudierte Rohr durch das Vollbad gegeben ist und daß die Kammer unter Abdichtung des Durchtritts für das extrudierte Rohr unmittelbar mit dem Vakuumtank verbunden und zwischen Meßteil und Vakuumtank eine wasser- und vakuumführende Verbindung eingerichtet ist.

Mit der Erfindung ist der Vorteil verbunden, daß die Kühlung der Kalibrierhülse im Vollbad wesentlich effektiver ist, wobei durch die vollständige Benetzung der Oberfläche mit Wasser auch die Gleiteigenschaften des extrudierten Rohres in der Kalibrierhülse beim Vorschub des Rohres verbessert werden. Die ebenfalls durch ein Vollbad herbeigeführte Ankopplung der Meßköpfe an das zu messende Rohr führt nunmehr zu verläßlichen Meßwerten, ohne eine Verfälschung durch Schwankungen beim Ankoppelmedium. Weiter bereitet die Messung der Wanddicken auch verschiedener Rohre keine Probleme mehr, weil eine Anpassung der Wassersäule nicht mehr erforderlich ist. Ferner entfällt eine aufwendige Apparatur zur Versorgung der Kalibrierhülse und der Wanddickenmeßvorrichtung mit Wasser. Aufgrund der vorgesehenen wasser- und vakuumführenden Verbindug zwischen der Kammer und dem Vakuumtank wird das im Vakuumtank ohnehin anstehende Vakuum sowie das dort befindliche Kühlwasser auch für den Kühlteil und den Meßteil der Kammer nutzbar gemacht.

Nach einem Ausführungsbeispiel der Erfindung ist in die Verbinddung zwischen Vakuumtank und Meßteil der Kammer eine leicht auswechselbare Schiebedichtung zur Einstellung des Wasserstandes in dem Meßteil der Kammer eingerichtet. Dabei kann die Abdichtung über die Schiebedichtung größer als der Rohrdurchmesser ausgelegt werden, weil die eingesetzte Kühlwassermenge so groß ist, daß trotz eines geringfügigen Wasserdurchtritts im Bereich der Schiebedichtung sich das Wasser in der Kammer aufbaut und im wesentlichen über die Schiebedichtung abfließt. Damit findet eine Abdichtung über einen dünnen Wasserfilm statt, der wegen des auf beiden Seiten der Dichtung herrschenden Wasser-Vollbades nicht stört.

Vorteilhaft weist die Kammer an ihrem Meßteil einen öffenbaren und vakuumdicht schließbaren Deckel als Zugang zur Wanddickenmeßvorrichtung auf, so daß die Justierung und die Einrichtung der Wanddickenmeßvorrichtung bei einem Kalibrierhülsenwechsel erleichtert sind.

Nach einem Ausführungsbeispiel der Erfindung ist zwischen Vakuumtank und dem Kühlteil der Kammer eine Leitung zur Auffüllung des Wasserstandes in dem Kühlteil mit aus dem Vakuumtank abfließenden Wasser angeordnet, so daß eine Versorgung der Kammer mit Wasser und Vakuum unproblematisch ist.

Nach einem Ausführungsbeispiel der Erfindung wird die Messung der Wanddicke des extrudierten Rohres unmittelbar hinter dem Ende der Kalibrierhülse durchgeführt.

Bei einem vorteilhaften Ausführungsbeispiel der Erfindung erfolgt die Messung der Wanddicke des extrudierten Rohres an einem durch die Kalibrierhülse abgestützten Abschnitt des Rohres, wobei hiermit der Vorteil verbunden ist, daß aufgrund der frühzeitigen Wanddickenmessung des extrudierten Rohres noch im Bereich der Kalibrierhülse die Fehlererkennung außerordentlich frühzeitig erfolgt, so daß mit geringer Totzeit eine Korrektur der Einstellung des Extruders möglich ist. Damit kann die Ausschußquote der Extruderanlage verringert und aufgrund der so möglichen Feinsteuerung auch bei Vermeidung von Übergewicht Material eingespart werden.

Ein weiterer Vorteil besteht darin, daß die Messung in der Kalibrierhülse und damit bei einer durch die Kalibrierhülse gegebenen Abstützung und Führung des Rohres während des Meßvorgangs erfolgt; da das Rohr schwingungsfrei in der Kalibrierhülse geführt wird, sind Meßungenauigkeiten vermindert. Ferner ist nach einem genauen Ausrichten des Meßkopfes reproduzierbar gewährleistet, daß der von dem Mekopf ausgehende Ultraschall exakt im Winkel von 90 Grad auf die Oberfläche des Rohres trifft, weil das Rohr seine durch die Kalibrierhülse definierte Lage während des Meßvorganges nicht ändert.

Aufgrund der im Endbereich der Kalibrierhülse vorgenommenen Messung ist zudem eine Temperaturhomogenität des extrudierten Rohres gegeben, die ebenfalls eine wichtige Voraussetzung für die Meßgenauigkeit bei der Wanddickenmessung über Ultraschall darstellt, und schließlich ist als ein Ergebnis der Messung aufgrund der Durchmesserfixierung des Rohres in der Kalibrierhülse und der genauen Bestimmung der mittleren Wanddicke eine Berechnung des exakten Metergewichtes des extrudierten Rohres möglich.

Aufgrund der Zuordnung der Wanddickenmeßvorrichtung zu dem Endbereich der Kalibrierhülse ist erfindungsgemäß eine berührungslose Wanddickenmessung des extrudierten Rohres möglich, so daß Deformationen insbesondere dünnwandig extrudierter Rohre nicht eintreten können.

Nach einem weiteren Ausführungsbeispiel der Erfindung ist vorgesehen, daß wenigstens ein nach dem Ultraschallprinzip arbeitender Meßkopf radial zur Oberfläche der Kalibrierhülse ausgerichtet angeordnet ist. Bei diesem Ausführungsbeispiel erfolgt die Messung der Wanddicke durch das Material der Kalibrierhülse hindurch, so daß bei der Auswertung der Ultraschall-Meßwerte die Messung um die bekannten Abmessungen der Kalibrierhülse zu korrigieren ist. Da die diesbezüglichen Werte für die Kalibrierhülse jedoch bekannt sind und sich über den Extrudiervorgang eines Rohres nicht ändern, bleibt die diesbezügliche Korrektur ohne Einfluß auf die Bestimmung der Wanddicke des extrudierten Rohres.

Nach bevorzugten Ausführungsformen der Erfindung ist die Kalibrierhülse in ihrem der Wanddickenmeßvorrichtung zugeordneten Endbereich mit Durchtrittsöffnungen für wenigstens einen nach dem Ultraschallprinzip arbeitenden Meßkopf versehen, wodurch eine unmittelbare Messung der Wanddicke ohne Korrektur ermöglicht ist. Nach einem ersten Ausführungsbeispiel der Erfindung mit statisch angeordneten Meßköpfen ist vorgesehen, daß die Kalibrierhülse über ihren Umfang verteilt mehrere Durchtrittsöffnungen aufweist, über denen ein oder mehrere Meßköpfe angeordnet sind, so daß durch die Öffnungen die Messung ungehindert erfolgt. Dabei können mehrere Meßköpfe über den Umfang des Rohres verteilt über dem Endbereich der Kalibrierhülse eingesetzt sein.

Soweit nach einem Ausführungsbeispiel der Erfindung der wenigstens eine Meßkopf rotierend und/oder reversierend um das Rohr angeordnet sein soll, ist vorgesehen, daß der Endbereich der Kalibrierhülse von deren Hülsenkörper unter Ausbildung eines Zwischenraumes abgetrennt angeordnet ist, wobei der Meßkopf sich über oder in dem so gebildeten Zwischenraum zwischen dem Endbereich und dem Hülsenkörper der Kalibrierhülse bewegend angeordnet ist; zweckmäßig ist die Breite dieses Zwischenraumes etwas größer ausgelegt als das diesbezügliche Maß des Meßkopfes. Auch bei diesem Ausführungsbeispiel ist eine sichere und genaue Messung der Wanddicke des extrudierten Rohres möglich, weil das extrudierte Rohr vor und nach dem Zwischenraum und der dadurch gegebenen Meßstelle durch die Kalibrierhülse schwingungsfrei geführt ist.

Soweit ein einziger Meßkopf über einen Winkelbereich um das Rohr rotierend und/oder reversierend bei Ausführung der Messung angeordnet sein soll, sieht eine darauf abgestimmte Ausführungsform der Erfindung vor, daß sich die Durchtrittsöffnung für den Meßkopf schraubenförmig über den vom Meßkopf überstrichenen Winkelbereich erstreckt, wobei eine Vorrichtung zur Führung des mit axialem Vorschub rotierenden Meßkopfes vorgesehen ist. Eine derartige Ausführungsform empfiehlt sich insbesondere bei Einsatz nur eines Meßkopfes mit einem von diesem überstrichenen Winkelbereich von 360 Grad.

Soweit mehrere, über Teilwinkelbereiche rotierende und/oder reversierende Meßköpfe vorgesehen sind, können nach einem Ausführungsbeispiel der Erfindung auch mehrere nutartige Durchtrittsöffnungen vorgesehen sein, die sich über den von dem zugeordneten Meßkopf überstrichenen Winkelbereich erstrecken und in Längsrichtung der Kalibrierhülse versetzt zueinander angeordnet sind. Hierbei kann dann auf eine schraubenförmige Ausbildung verzichtet sein, vielmehr können die Nuten und damit die Bewegungsbahn der Meßköpfe in einer Ebene radial zur Längsachse der Kalibrierhülse angeordnet sein.

Soweit nach einem Ausführungsbeispiel der Erfindung der Meßteil der Kammer mit eimem Deckel versehen ist, ist sichergestellt, daß die Wanddickenmeßvorrichtung bei von der Kammer abgenommenem Deckel für Wartungs- und Reparatur- beziehungsweise Einstellungsarbeiten gut zugänglich ist. Dabei ist es besonders zweckmäßig, die Wanddickenmeßvorrichtung an einem in dem Meßteil der Kammer radial verfahrbar angeordneten Rahmen zu haltern, so daß die Wanddickenmeßvorrichtung aus der sie beinhaltenden Kammer herausgehoben werden kann. Die Wanddickenmeßvorrichtung besteht dabei im einzelnen aus einer stirnseitig an das Ende des Endbereiches der Kalibrierhülse abzusenkenden Platte, an welcher die Meßköpfe mit in Längsrichtung der Kalibrierhülse ausgebildetem Abstand angeordnet sind, so daß die Meßköpfe über dem Endbereich der Kalibrierhülse zu liegen kommen.

Zweckmäßig kann die Wanddickenmeßvorrichtung über den Endbereich der Kalibrierhülse in deren Längsrichtung axial verschiebbar angeordnet sein, so daß die Meßköpfe auch in Längsrichtung der Kalibrierhülse beziehungsweise deren Endbereich genau einstellbar sind.

In der Zeichnung sind Ausführungsbeispiele der Erfindung wiedergegeben, welche nachstehend beschrieben sind. Es zeigen:
- Fig. 1: in einer schematischen Darstellung die Extrudieranlage mit einer die Kalibrierhülse und die Wanddickenmeßvorrichtung beinhaltenden Kammer sowie einer nachgeschalteten Durchlaufkühlkammer als Vakuumtank,
- Fig.2: in einer Einzeldarstellung den Endbereich der Kalibrierhülse mit Durchtrittsöffnung für einen nicht dargestellten Meßkopf, entsprechend Figur 1,
- Fig. 3: den Gegenstand der Figur 2 in einer anderen Ausführungsform,
- Fig. 4: den Gegenstand der Figur 2 in einer weiteren Ausführungsform,
- Fig. 5: den Gegenstand der Figur 2 in einer weiteren Ausführungsform,
- Fig. 6: in einer Einzeldarstellung eine Vorderansicht der Wanddickenmeßvorrichtung gemäß Figuren 1 und 2,
- Fig. 7: den Gegenstand der Figur 6 in einer anderen Ausführungsform (Figur 5).

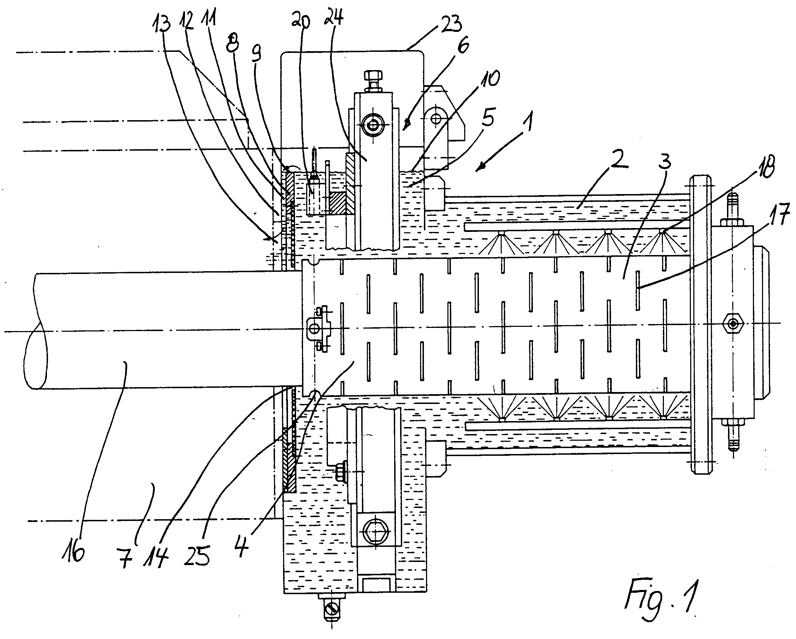

Die aus Figur 1 ersichtliche Extrudieranlage weist eine im Anschluß an einen nicht dargestellten Extruderkopf angeordnete Kammer 1 auf, in deren vorderen Kühlteil 2 eine Kalibrierhülse 3 sitzt, die mit ihrem Endbereich 4 in einen Meßteil 5 der Kammer 1 reicht, in welchem eine dem Endbereich 4 der Kalibrierhülse 3 zugeordnete Wanddickenmeßvorrichtung 6 angeordnet ist. An die Kammer 1 schließt eine mit dieser wasser- und vakuumführend verbundene Durchlaufkühlkammer als Vakuumtank 7 an, in welcher das mit 16 angedeutete Rohr in einer bekannten Weise weiter abgekühlt wird.

In an sich bekannter Weise weist die Kalibrierhülse 3 über ihren Umfang und ihrer Längserstreckung verteilt angeordnete Schlitze 17 auf, und in dem Kühlteil 2 der Kammer 1 sind über die Länge der Kalibrierhülse 3 und dern Umfang verteilt auf die Kalibrierhülse 3 zugerichtete Düsen 18 angeordnet, die einer Verwirbelung des die Kalibrierhülse 3 umgebenden Vollbades an Wasser herbeiführen und so die Kühlung der Kalibrierhülse in dem Vollbad noch verbessern. Die Durchführung des Kalibrierverfahrens selbst, also mit Vakuum wie in der gattungsbildenden DE 39 36 496 A1 beschrieben oder alternativ in an sich bekannter Weise unter Einsatz von Stützluft, ist von der vorstehend beschriebenen apparativen Ausstattung der Extrudieranlage unabhängig.

Zwischen der Durchlaufkühlkammer 7 und der damit verbundenen Kammer 1 beziehungsweise deren Meßteil 5 ist eine Schiebedichtung 8 angeordnet, die zunächst das extrudierte Rohr 16 dichtend umgibt und an ihrem oberen Ende einen Überlauf 9 ausbildet, dessen Lage die Höhe des Wasserstandes 10 in der Kammer 1 beziehungsweise deren Meßteil 5 festlegt. Durch die mittels Auswechslung der Schiebedichtung 8 mögliche Einstellung des Überlaufes 9 ist der Wasserstand 10 in seiner Höhe einstellbar. Die Schiebedichtung 8 umgibt das extrudierte Rohr 16 mit einem geringen Abstand, so daß sich ein Spalt 14 zwischen der Schiebedichtung 8 und dem Rohr 16 einstellt. Dieser Spalt 14 wird durch den sich darin auf der Rohroberfläche einstellenden Wasserfilm selbst abgedichtet, wobei der geringfügige Wasserdurchtritt nicht weiter stört, da zu beiden Seiten der Schiebedichtung 8 ein Vollbad gegeben ist. Aufgrund der großen Kühlwassermenge in der Kammer 1 steigt der Wasserspiegel dort bis zum Erreichen des Wasserstandes 10 an. Die Schiebedichtung 8 ist mit einem Abstand 11 zu der Trennwand 12 zwischen dem Vakuumtank 7 und der Kammer 1 angeordnet, wobei die Trennwand 12 eine Öffnung 13 zum Vakuumtank 7 ausweist, so daß über den durch die Öffnung 13, den Abstand 11 sowie den Überlauf 9 gebildeten Weg aus der Kammer 1 Wasser in den Vakuumtank 7 abströmen und gleichzeitig das in dem Vakuumtank 7 herrschende Vakuum in die Kammer 1 mit Meßteil 5 und Kühlteil 2 hineinwirken kann. Wie nicht weiter dargestellt ist, ist zwischen dem Vakuumtank 7 und dem Kühlteil 2 der Kammer 1 eine Leitung angeordnet, mittels der eine Zuführung von Wasser aus dem Vakuumtank 7 in die Kammer 1 erfolgt, so daß auf diesem Wege ein Austausch des Kühlwassers in der Kammer 1 vorgenommen wird.

Die in dem Meßteil 5 der Kammer 1 angeordnete Wanddickenmeßvorrichtung 6 hat bei dem dargestellten Ausführungsbeispiel zwei um 90 Grad über den Umfang der Kalibrierhülse 3 versetzt angeordnete, nach dem Ultraschallprinzip arbeitende Meßköpfe 20. Da die Kammer 1 mit Wasser gefüllt ist, ist eine berührungslose Messung über Ultraschall in einem wassergefüllten Raum am effektivsten ausführbar. Gleichzeitig steht die Kammer 1 unter Vakuum, um eine Beeinflussung der Messungen durch Luftbläschen und dergleichen zu vermeiden.

Der Meßteil 5 der Kammer 1 hat einen öffenbar eingerichteten Deckel 23, über den ein ungehinderter Zugang zur Wanddickenmeßvorrichtung 6 für deren Justierung und Wartung gegeben ist. Hierzu sind der beziehungsweise die Meßköpfe 20 an einem in der Kammer 1 geführten Rahmen 24 gehaltert, wobei dieser Rahmen 24 bei geöffnetem Deckel 23 nach oben aus der Kammer 1 heraushebbar ist, und zwar nach dem Herausnehmen der Kalibrierhülse 3.

Bei dem in Figur 1 dargestellten und in Figur 2 in einem Teilaspekt wiedergegebenen Ausführungsbeispiel besteht die Wanddickenmeßvorrichtung 6 aus zwei stationär angeordneten Meßköpfen 20. Die Kalibrierhülse 2 weist in ihrem Endbereich 4 über deren Umfang verteilt Bohrungen 25 auf, über denen der beziehungsweise die Meßköpfe 20 angeordnet sind, um die Wanddicke des durch die Kalibrierhülse 3 gezogenen Rohres 16 zu messen. Wie Figur 2 näher erkennenläßt, sind insgesamt vier im Winkel von 90 Grad versetzt zueinander angeordnete Bohrungen 25 vorhanden, von denen jedoch nur zwei um 90 Grad versetzt zueinander angeordnete Bohrungen mit je einem Meßkopf besetzt sind, um in um 90 Grad zueinander versetzten Ebenen die Messung durchzuführen. Die Messung erfolgt dabei durch die zugeordneten Bohrungen 25 hindurch ohne Behinderung durch die Kalibrierhülse 3.

Bei dem in Figur 3 dargestellten Ausführungsbeispiel der Erfindung ist der Endbereich 4 von dem Hülsenkörper der Kalibrierhülse 3 unter Bildung eines Zwischenraumes 26 abgesetzt, und damit ist die Möglichkeit gegeben, über oder auch in dem Zwischenraum 26 rotierend beziehungsweise reversierend einen Meßkopf um das Rohr 16 laufen zu lassen. Dabei ist aber eine geraderichtende Führung des Rohres nicht unterbrochen, da das Rohr in der Kalibrierhülse 3 wie auch in deren Endbereich 4 und damit vor und hinter der Meßstelle im Zwischenraum 26 unter gleichen Bedingungen geführt ist. Der Endbereich 4 wird in der Schiebedichtung 8 befestigt.

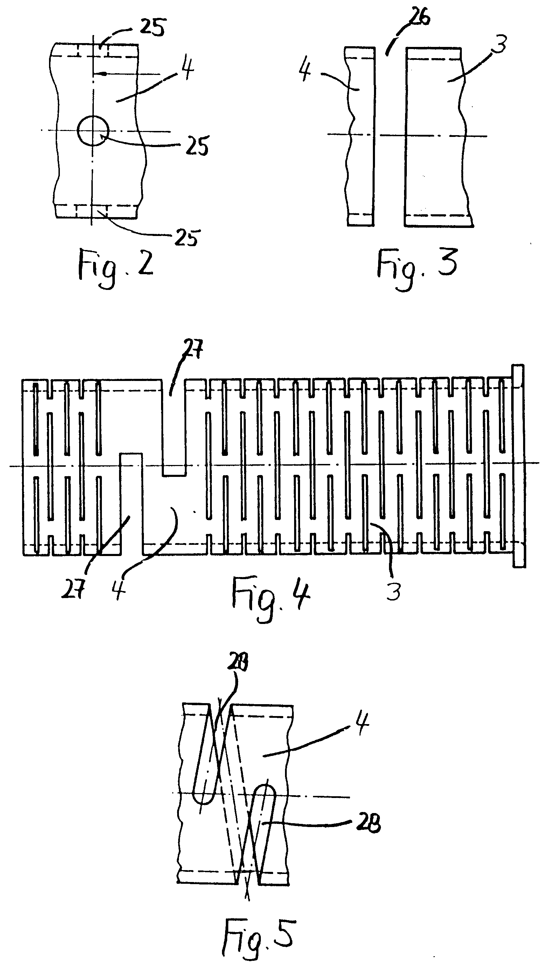

Figur 4 zeigt die Einrichtung des Endbereiches 4 der Kalibrierhülse 3 für die Anordnung von zwei rotierend und/oder reversierend angeordneten Meßköpfen 20, die jeweils um das Rohr 16 sich bewegend einen Winkelbereich von 180 Grad überstreichen. Hierzu weist der Endbereich 4 der Kalibrierhülse 3 zwei sich über 180 Grad erstreckende Nuten 27 auf, die in Längsrichtung des Endbereiches 4 versetzt zueinander angeordnet sind, so daß die beiden zugeordneten Meßköpfe rotierend und/oder reversierend in beziehungsweise über den Nuten 27 laufen können.

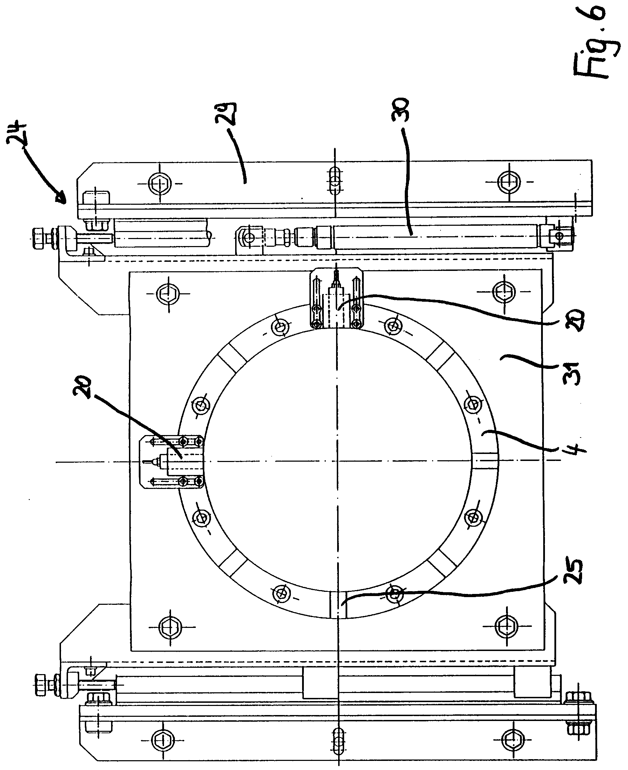

Aus Figur 5 ergibt sich ein abgewandeltes Ausführungsbeispiel, bei welchem ein einziger Meßkopf einen Winkelbereich von 360 Grad überstreichend angeordnet sein kann; hierzu weist der Endbereich 4 der Kalibrierhülse 3 eine über 360 Grad sich schraubenförmig erstreckende Nut 28 auf, und für dieses Ausführungsbeispiel bedarf es zur Führung des Meßkopfes einer Vorrichtung, die den Meßkopf mit 360 Grad-Rotation und in Axialrichtung der Kalibrierhülse vorgegebenem Versatz führt, wobei dieser axiale Versatz der Gesamtsteigung der schraubenförmigen Nut 28 in Axialrichtung der Kalibrierhülse 3 entsprechen muß.

Zur Erfindung zählt auch eine Ausführungsform, welche in der Zeichnung nicht dargestellt ist, nämlich die Anordnung von statischen oder rotierend und/oder reversierend angeordneten Meßköpfen, welche die Wanddickenmessung durch die Kalibrierhülse hindurch durchführen, wobei die so gemessenen Werte um die für die Kalibrierhülse geltenden Konstanten zu korrigieren sind.

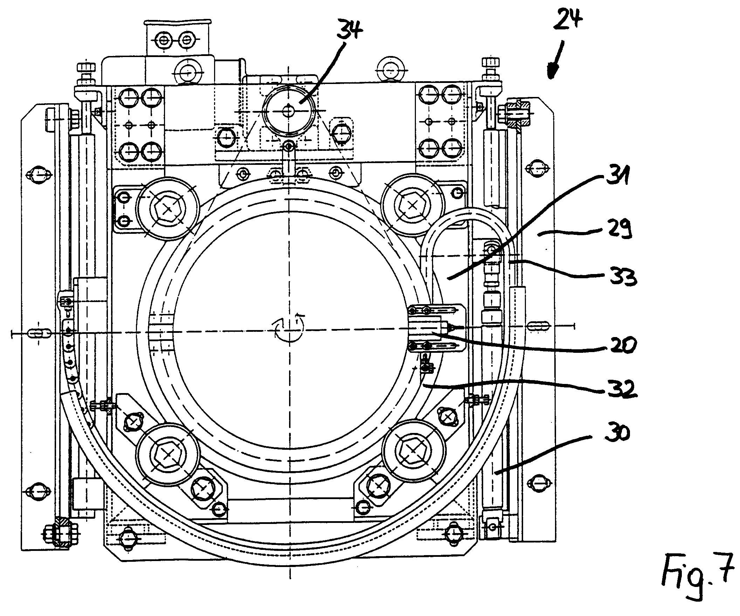

In den Figuren 6 und 7 sind zwei alternative Ausführungsformen des Teilaspektes der Erfindung betreffend die Halterung der Meßköpfe an der Wanddickenmeßvorrichtung dargestellt. Bei dem in Figur 6 dargestellten Ausführungsbeispiel der Anordnung von statischen Meßköpfen 20 weisen die in dem Meßteil 5 der Kammer 1 angeordneten Rahmen 24 eine mit der Wandung der Kammer 1 verbundene Führung 29 und eine in der Führung 29 über Zylinder 30 verschiebbar angeordnete Platte 31 auf, wobei die Platte 31 stirnseitig hinter dem Ende des Endbereiches 4 der Kalibrierhülse 3 zu liegen kommt. Aus diesem Grunde ist bei der dargestellten Ansicht die Stirnansicht des Endes des Endbereiches 4 der Kalibrierhülse 3 mit erfaßt. An der Platte 31 sind bei dem dargestellten Ausführungsbeispiel zwei Meßköpfe 20 gehaltert, die mit in Längsrichtung der Kalibrierhülse axialem Versatz zur Platte 31 angeordnet sind, so daß ausgehend von der stirnseitig am Ende des Endbereiches 4 der Kalibrierhülse 3 liegenden Platte 31 die Meßköpfe 20 über dem Endbereich 4 der Kalibrierhülse 3 zu liegen kommen.

Aus Figur 7 ergibt sich eine entsprechende Anordnung für einen rotativ-reversierend angeordneten Meßkopf 20, der zu diesem Zweck in einem Führungsring 32 über den Umfang des Endabschnittes 4 der Kalibrierhülse geführt und über eine Schleppkette 33 zur Energieversorgung und Meßwertübertragung an eine entsprechende Einrichtung angeschlossen ist. Ein Antrieb 34 sorgt für die Bewegung des Meßkopfes 20 in dem Führungsring 32. Auch hierbei ist die Anordnung an einer in festen Führungen 29 über Zylinder 30 höhenverschiebbar gehalterten Platte 31 vorgesehen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Extrudieranlage für Kunststoffrohre, bestehend aus einem Extruder, einer Kühlkammer mit einer darin angeordneten wassergekühlten und das extrudierte Rohr gegen die Innenseite ihrer Wandung ziehenden Kalibrierhülse sowie einer nachgeschalteten, als Vakuumtank ausgebildeten Durchlaufkühlkammer, wobei eine Wanddickenmeßvorrichtung mit einem oder mehreren radial zum Rohr ausgerichteten und nach dem Ultraschallprinzip arbeitenden Meßköpfen vorgesehen ist, dadurch gekennzeichnet, daß die Kalibrierhülse (3) und die Wanddickenmeßvorrichtung (6) in einer gemeinsamen mit Wasser gefüllten Kammer (1) mit einem Kühlteil (2) und mit einem Meßteil (5) angeordnet sind, wobei die Kalibrierhülse (3) in dem ein Vollbad dafür beinhaltenden Kühlteil der Kammer (1) liegt und die Wanddickenmeßvorrichtung (6) in dem wassergefüllten Meßteil (5) derart angeordnet ist, daß eine Ankopplung des wenigstens einen Meßkopfes (20) an das extrudierte Rohr (16) durch das Vollbad gegeben ist, und daß die Kammer (1) unter Abdichtung des Durchtritts für das extrudierte Rohr (16) unmittelbar mit dem Vakuumtank (7) verbunden und zwischen Meßteil (5) und Vakuumtank (7) eine wasser- und vakuumführende Verbindung (13;9) eingerichtet ist.

2. Extrudieranlage nach Anspruch 1, dadurch gekennzeichnet, daß in die Verbindung (13;9) zwischen Vakuumtank (7) und Meßteil (5) der Kammer (1) eine Schiebedichtung (8) zur Einstellung des Wasserstandes (10) in dem Meßteil (5) der Kammer (1) eingerichtet ist.

3. Extrudieranlage nach Anspruch 1 oder 2, dadurch gekennzeichnet, daß die Kammer (1) an ihrem Meßteil (5) einen öffenbaren und vakuumdicht schließbaren Deckel (23) als Zugang zur Wanddickenmeßvorrichtung (6) aufweist.

4. Extrudieranlage nach einem der Ansprüche 1 bis 3, dadurch gekennzeichnet, daß zwischen Vakuumtank (7) und Kühlteil (2) der Kammer (1) eine Leitung zur Auffüllung des Wasserstandes in dem Kühlteil (2) mit aus dem Vakuumtank (7) abfließenden Wasser angeordnet ist.

5. Extrudieranlage nach einem der Ansprüche 1 und 4, dadurch gekennzeichnet, daß die Messung der Wanddicke des extrudierten Rohres (16) unmittelbar hinter dem Ende (4) der Kalibrierhülse (2) erfolgt.

6. Extrudieranlage nach einem der Ansprüche 1 bis 4, dadurch gekennzeichnet, daß die Messung der Wanddicke des extrudierten Rohres (16) an einem durch die Kalibrierhülse (2) abgestützten Abschnitt des Rohres (16) erfolgt.

7. Extrudieranlage nach Anspruch 6, dadurch gekennzeichnet, daß die Kalibrierhülse (3) in ihrem der Wanddickenmeßvorrichtung (6) zugeordneten Endbereich (4) wenigstens eine Durchtrittsöffnung (25, 26, 27, 28) für wenigstens einen nach dem Ultraschallprinzip arbeitenden Meßkopf (20) aufweist.

8. Extrudieranlage nach Anspruch 7, mit wenigstens einem statisch angeordneten Meßkopf, dadurch gekennzeichnet, daß der Endbereich (4) der Kalibrierhülse (3) über seinen Umfang verteilt mehrere Durchtrittsöffnungen (25) mit darüber angeordneten Meßköpfen (20) aufweist.

9. Extrudieranlage nach Anspruch 7, wobei der wenigstens eine Meßkopf rotierend und/oder reversierend um das extrudierte Rohr angeordnet ist, dadurch gekennzeichnet, daß der Endbereich (4) der Kalibrierhülse (3) von dem Hülsenkörper der Kalibrierhülse (3) unter Ausbildung eines Zwischenraumes (26) abgetrennt und der Meßkopf (20) in oder über dem Zwischenraum (26) um das Rohr (16) sich bewegend angeordnet ist.

10. Extrudieranlage nach Anspruch 9, dadurch gekennzeichnet, daß die Breite des Zwischenraumes (26) etwas größer bemessen ist als die zugeordnete Abmessung des Meßkopfes (20).

11. Extrudieranlage nach Anspruch 7, wobei der wenigstens eine Meßkopf über einen Winkelbereich um das Rohr rotierend und/oder reversierend angeordnet ist, dadurch gekennzeichnet, daß die Durchtrittsöffnung (28) für den Meßkopf (20) sich schraubenförmig über den vom Meßkopf (20) überstrichenen Winkelbereich erstreckt und eine Vorrichtung zur Führung des mit axialem Vorschub um das Rohr (16) rotierenden Meßkopfes (20) vorgesehen ist.

12. Extrudieranlage nach Anspruch 7, wobei der wenigstens eine Meßkopf über einen Winkelbereich um das Rohr rotierend und/oder reversierend angeordnet ist, dadurch gekennzeichnet, daß wenigstens zwei Meßköpfe um den überstrichenen Winkelbereich sowie in Längsrichtung der Kalibrierhülse (3) versetzt zueinander angeordnet sind und daß der Endbereich (4) der Kalibrierhülse (3) zugeordnete in Längsrichtung versetzte und sich über den vom zugeordneten Meßkopf überstrichenen Winkelbereich erstreckende Nuten (27) aufweist.

13. Extrudieranlage nach einem der Ansprüche 1 bis 12, dadurch gekennzeichnet, daß die Wanddickenmeßvorrichtung (6) mit Meßköpfen in einem in dem Meßteil der Kammer radial verfahrbar angeordneten Rahmen (24) gehaltert ist.

14. Extrudieranlage nach einem der Ansprüche 1 bis 13, dadurch gekennzeichnet, daß die Wanddickenmeßvorrichtung (6) über den Endbereich (4) der Kalibrierhülse (2) in deren Längsrichtung verschiebbar ist.

15. Extrudieranlage nach einem der Ansprüche 1 bis 14, dadurch gekennzeichnet, daß in dem Kühlteil (2) der Kammer (1) Düsen (18) zur Verwirbelung des Vollbades angeordnet sind.
